# EUROPÄISCHE PATENTANMELDUNG

(11) **EP 1 638 190 A1**
(43) Veröffentlichungstag der Anmeldung: **22.03.2006**
(21) Anmeldenummer: 04021943.8
(22) Anmeldetag: 15.09.2004
(51) Int. Cl.: H02K 3/48, H02K 15/00

(54) **Vorrichtung zum Fixieren von Wicklungsstäben in Nuten elektrischer Maschinen**

(71) Anmelder: SIEMENS AKTIENGESELLSCHAFT, 80333 München (DE)
(72) Erfinder: Ossowski, Sascha, 45481 Mülheim (DE)

(57) **Zusammenfassung**

Eine Vorrichtung zum Fixieren von Wicklungsstäben (6) in Nuten (4) elektrischer Maschinen, insbesondere zum Fixieren von Wicklungsstäben (6) in Nuten eines Ständers (2) eines elektrischen Generators, soll derart ausgestaltet sein, dass sich die Wicklungsstäbe (6) möglichst einfach bei einer hohen Festigkeit in Nuten (4) fixieren lassen. Dazu sind erfindungsgemäß eine Anzahl von Wicklungsstäben (6) in einer Nut (4) eines Blechpaketes (2) mit einer Kombination aus in Ausnehmung der Nutseitenflächen verfestigten, die Nut (4) nach oben hin abschließenden Deckkeil (20) und einem darunter liegenden Treibkeil (22) fixiert, wobei Deckkeil (20) und Treibkeil (22), bezüglich ihrer in Längsrichtung zulaufenden Anzugsfläche umgekehrt gegeneinander ausgerichtet sind und mit ihren Anzugsflächen aneinander liegen.

## Beschreibung

Die Erfindung bezieht sich auf eine Vorrichtung zum Fixieren von Wicklungsstäben in Nuten elektrischer Maschinen, insbesondere zum Fixieren von Wicklungsstäben in Nuten eines Ständers eines elektrischen Generators. Die Erfindung betrifft weiterhin ein Verfahren zum Fixieren von Wicklungsstäben in Nuten elektrischer Maschinen.

Elektrische Generatoren weisen in der Regel eine rotierende Feldwicklung und eine feststehende Ständerwicklung auf. Dabei ist die Ständerwicklung in einem ringförmig ausgeführten Ständer, der auch Stator genannt wird, und die Induktionswicklung im rotierenden Generatorrotor bzw. Induktor angeordnet. Der Rotor ist derart drehbar innerhalb des ringförmigen Ständers gelagert, dass Rotor und Ständer lediglich durch einen schmalen Luftspalt voneinander beabstandet sind.

Der Ständer eines Generators setzt sich dabei im Wesentlichen aus einem Blechpaket zusammen, in dem die Ständerwicklungen integriert sind. Dabei dient das Blechpaket zu einer Verstärkung des magnetischen Feldes, wobei durch die aufeinander gestapelten und voneinander mit einem Isolationsschutz isolierten Bleche das Entstehen von Wirbelströmen verhindert werden soll, wodurch sich die Energieeffizienz erhöhen lässt.

Üblicherweise sind in dem ringförmig ausgeführten Ständer in dem Blechpaket von der Innenseite her Nuten in radialer Richtung für die Aufnahme der Leitungswicklungen vorgesehen, so dass die Wicklungsleitungen für eine hohe Energieeffizienz möglichst nah am Rotor, der bei der Montage des Generators in den Ständer eingesetzt wird, positioniert sind. Das Blechpaket des Ständers weist daher abwechselnd Ständernuten und Ständerzähne auf. In der Regel wird in eine Ständernut nicht eine einzelne Leitungswicklung eingebracht, sondern ein oder mehrere Wicklungsstäbe. Ein Wicklungsstab setzt sich im Allgemeinen aus einer Anzahl elektrisch leitender Massivleiter, einer Anzahl von Hohlleitern, über die ein Wicklungsstab und der Ständer gekühlt werden kann, und entsprechender Isolationsschichten zusammen. Dabei sind sowohl die einzelnen Leiterebenen voneinander als auch die einzelnen Wicklungsleitungen mit einer Isolationsschicht voneinander und zur Nutwand hin isoliert gehalten. Üblicherweise werden in einer Nut insbesondere zwei Wicklungsstäbe übereinander positioniert, die im Allgemeinen Unter- und Oberwicklungsstab genannt werden.

Um die Wicklungsstäbe in der Nut zu befestigen, werden diese in der Regel mit einem Nutverschlusskeil in einer Nut ein- bzw. festgekeilt, wobei der Nutverschlusskeil in Längsrichtung, in axialer Richtung des Generators, an der Nut befestigt wird. Dazu wird dieser in Ausnehmungen der Nutseitenflächen eingeschoben bzw. eingetrieben, so dass dieser die Nut zum Luftspalt hin, die sich zwischen Rotor und Ständer befindet, abschließt. Dabei kann der Nutverschlusskeil entweder direkt bündig mit den Ständerzähnen abschließen oder aber durch eine so genannte Vornut radial nach außen in der Nut zurückversetzt sein.

Mit zunehmender Leistung dynamoelektrischer Maschinen bzw. elektrischer Generatoren und damit steigenden Stabströmen kommt dem Problem der sich daraus ergebenden Stabkräfte, die pulsierend in Richtung auf den Nutengrund wirken, eine erhöhte Bedeutung zu. Dabei wirkt sich insbesondere bei Generatoren mit hoher Leistung problematisch aus, dass die Stabkräfte quadratisch mit den Stabströmen ansteigen. Der Stabverband, die einzelnen Wicklungen und die Isolation sind dabei einer ständigen Druckschwellbeanspruchung ausgesetzt, die sich zerstörend auf die Wicklungsstäbe und die Isolation auswirken kann.

Entsteht im Laufe des Betriebes Spiel zwischen den Wicklungsstäben und dem Nutverschlusskeil, so schwingt ein Wicklungsstab in dem durch das Spiel begrenzten freien Raum. Daher kann es zu einem Hämmern der Wicklungsstäbe auf ihrer Unterlage kommen, wodurch die auf die Isolation wirkenden Vibrationskräfte ein Vielfaches der pulsierenden elektromagnetischen Stabkräfte betragen können. Bei wassergekühlten Wicklungen können diese Kräfte nicht nur die Isolation zerstören, sondern auch Risse in den Hohlleitern verursachen, die ihrerseits zu Leckagen und durch die Feuchtigkeitswirkung zu Erd-und Windungsschlüssen führen können. Die Folge kann die Zerstörung der Ständerwicklung oder gar des Ständerblechpaketes sein.

In diesem Zusammenhang sind verschiedene Anordnungen bekannt, die eine Fixierung der Wicklungsstäbe in der Nut sicherstellen sollen. Beispielsweise kann zwischen dem Oberwicklungsstab und dem Nutverschlusskeil eine Feder eingelegt werden, wobei die Feder derart ausgelegt sein kann, dass sie durch einen Drehmechanismus im Nutverschlusskeil nachgespannt werden kann. Nachteilig an einer derartigen Feder ist, dass der Nutverschlusskeil durch die Nachspannvorrichtung geschwächt wird und ein Nachspannen nur bei stehender Maschine und ausgebautem Generatorrotor durchgeführt werden kann.

Eine andere Möglichkeit ist, eine federvorbelastete Unterfütterung zu verwenden. In der Regel wird hierzu eine in Längsrichtung ausgeführte gewellte Plattfeder als Nutverschlussfeder verwendet. Zur Verfestigung wird der Nutverschlusskeil, der beispielsweise aus Baumwollhartgewebe oder Hartglasgewebe bestehen kann, mit Hammerschlägen in die Nut eingebracht, wobei die Nutverschlussfeder verfestigt bzw. vorgespannt wird.

Nachteilig an der Befestigung bzw. Verfestigung der Nutverschlusskeile ist, dass diese über den gesamten Weg der Keillänge unter einem enorm hohen axialen Kraftaufwand verfestigt werden müssen, da die Keile in der Regel in ihrer Länge nicht keilförmig ausgebildet sind, so dass viele Verfestigungsschritte mit hoher Kraft, wie beispielsweise Hammerschläge, notwendig sind. Dabei können an einem Generatorständer mehrere Hundert bis zu einigen Tausend Nutverschlusskeile angeordnet sein, so dass sich die aufwändige Verkeilung des Nutverschlusskeiles bei der hohen Summe der Keile bei der Fertigung wirtschaftlich negativ auswirkt.

Ein weiterer Nachteil, der durch den hohen Anpressdruck der Nutverschlusskeile beim Eintreiben entsteht, ist, dass beim Aufschlagen der Nutverschlusskeile die obere Flankenführung des Blechpaketes wie eine Raspel wirken kann und Teile der Oberfläche der Keilflanken abgetragen werden können. Dadurch wird die vorgesehene Vorspannung der Nutverschlussfeder bereits beim Eintreiben der Keile verringert, so dass sich die Wahrscheinlichkeit eines frühzeitigen Lösens der Nutverschlusskeile erhöht. Dieses kann insbesondere auch zu erhöhten Wartungsintervallen führen.

Weiterhin ist an den existierenden Nutverschlusskeilen problematisch, dass diese, falls sie sich im Laufe des Generatorbetriebes gelöst haben, nicht ohne einen Ausbau des Generatorrotors bzw. überhaupt nicht nachverkeilt werden können. Ein sich Lösen der Nutverschlusskeile ist ohne den Ausbau des Generators mit einer so genannten "Fast-Gen-Inspektion" detektierbar. Üblicherweise muss, falls bei einer derartigen Inspektion gelöste Keile detektiert werden, der Rotor demontiert werden, anschließend alle Keile ausgetrieben und wie oben beschrieben wieder aufgeschlagen werden. Diese aufwändige Verfahrensweise verlängert die Wartungsarbeiten eines Generators maßgeblich, wodurch die Verfügbarkeit und damit auch die Wirtschaftlichkeit des Generators herabgesetzt werden.

Der Erfindung liegt daher die Aufgabe zugrunde, eine Vorrichtung zum Fixieren von Wicklungsstäben in Nuten elektrischer Maschinen, insbesondere zum Fixieren von Wicklungsstäben in Nuten eines Ständers eines elektrischen Generators anzugeben, so dass sich die Wicklungsstäbe möglichst einfach bei einer hohen Festigkeit fixieren lassen. Des Weiteren soll ein zum Verkeilen einer derartigen Vorrichtung besonders geeignetes Verfahren angegeben werden.

Bezüglich der Vorrichtung wird diese Aufgabe erfindungsgemäß gelöst, indem eine Anzahl von Wicklungsstäben in einer Nut eines Blechpaketes mit einer Kombination aus in Ausnehmung der Nutseitenflächen verfestigten, die Nut nach ihrer Außenseite oder oben hin abschließenden Deckkeil und einem darunter liegenden Treibkeil fixiert sind, wobei Deckkeil und Treibkeil bezüglich ihrer in Längsrichtung zulaufenden Anzugsfläche umgekehrt gegeneinander ausgerichtet sind und mit ihren Anzugsflächen aneinander liegen.

Die Erfindung geht von der Überlegung aus, dass prinzipiell zum Fixieren von Wicklungsstäben eine Verkeilung sinnvoll ist, da diese Art der Befestigung eine hohe Befestigungssicherheit ermöglicht, die eine hohe radiale Kraft der Wicklungsstäbe aufnehmen kann. Allerdings sollte bei der Realisierung der Fixierung mit einer Verkeilung der benötigte axiale Kraftaufwand zum Eintreiben der Keile besonders gering gehalten werden, um die Verkeilung einfacher und schneller durchführen zu können. Dabei sollte insbesondere die Strecke, auf der ein Nutverschlusskeil verfestigt bzw. eingetrieben werden muss, reduziert werden, um die Schritte zur Verfestigung wie beispielsweise notwendige Hammerschläge zu reduzieren. Eine derartige Vereinfachung der Verkeilung mit wenigen Verfestigungsschritten würde auch eine Nachverkeilung bzw. Nachverspannung der Verkeilung ermöglichen. Ebenfalls sollte die Verkeilung so ausgestaltet sein, dass ein Abtragen der Oberfläche der Keilflanken möglichst verhindert werden kann.

Daher wird eine Keilkombination aus einem oben liegenden Deckkeil und einem darunter liegenden Treibkeil verwendet. Dabei sind die beiden Keile so angeordnet, dass sie mit ihren zulaufenden Anzugsflächen aneinander liegen, so dass die in Längsrichtung der Keile zulaufende Keilschräge entgegengesetzt angeordnet ist. Daher erhöht sich schon bei einer geringen axialen Bewegung der Keile zueinander die Breite des Keilpaares gegenüber den Aussparungen der Nut deutlich, so dass nur wenige Verfestigungsschritte notwendig sind, um ein Keilpaar in den Ausnehmungen einer Nut und die Wicklungsstäbe in der Nut einzuspannen bzw. zu verfestigen.

Die Steigung der Keilschrägen ist dabei vorteilhafterweise derart gewählt, dass sich bei wenigen Verfestigungsschritten eine hohe Verkeilungskraft einstellt. Der Deckkeil wird an den oberen Flanken der Ausnehmungen der Nut fixiert gehalten, so dass bei der Verkeilung kein Abtrag an den Keilflanken mehr auftreten kann. Der Treibkeil wird dagegen für die axiale Verkeilungsbewegung verwendet, wobei dieser fast bis zur endgültigen Endposition von Hand eingeschoben werden kann, und lediglich der letzte Abschnitt mit erhöhter axialer Kraft gegenüber dem schräg ansteigenden Deckkeil und der Nut eingetrieben werden muss.

Für eine geeignete Verkeilungsstabilität besteht ein Deckkeil vorteilhafterweise aus Baumwollhartgewebe und ein Treibkeil zweckmäßigerweise aus Hartglasgewebe.

Um die Verkeilungskombination aus einem Deckkeil und einem Treibkeil bei eingebautem Generatorrotor nachverkeilen zu können, weist ein Treibkeil vorzugsweise am äußeren Ende eine Bohrung auf. Über diese kann der Keil mit einer in die Bohrung eingreifenden Vorrichtung, wie beispielsweise einem Dorn oder einem Zapfen, nachverkeilt werden. Bei einer geeigneten Ausgestaltung der der in die Bohrung eingreifenden Vorrichtung kann ein Treibkeil so auch bei eingebautem Generatorrotor verfestigt werden, indem die Vorrichtung in dem Luftspalt zwischen Rotor und Generatorständer an die Bohrung herangeführt wird.

Um zu gewährleisten, dass die zur Nachverkeilung in die Bohrung des Treibkeils eingreifende Vorrichtung in die Bohrung des Treibkeils eingreifen kann, weist ein Deckkeil vorteilhafterweise im Bereich der Bohrung eines unten liegenden Treibkeils ein Langloch auf. Die zum Eintreiben des Treibkeils beim Nachverkeilen verwendete Vorrichtung kann über das Langloch des Deckkeils in die Bohrung des Treibkeils eingreifen und diesen im Bereich des Langlochs entsprechend zur Nachverkeilung verschieben bzw. verfestigen. Dabei kann eine hohe Stabilität der Verkeilung erreicht werden, da der Deckkeil, lediglich durch das Langloch unterbrochen, massiv ausgeführt sein und sich über die gesamte Nutlänge erstreckten kann.

Zweckmäßigerweise weisen eine Bohrung eines Treibkeils und ein Langloch eines Deckkeils den gleichen Durchmesser auf.

Für eine besonders leichte Verkeilung des Treibkeils und Deckkeils sind vorzugsweise eine oder beide aneinanderliegenden Anzugsflächen des Deckkeils und Treibkeils mit einer Beschichtung versehen, die einen im Vergleich zum Vollmaterial erniedrigten Reibungskoeffizienten aufweist. Dadurch kann die Reibung zwischen den Keilen beim Eintreiben des Treibkeils verringert werden, so dass sich die aufzubringende axiale Verkeilungskraft verringert. Als Beschichtung können beispielsweise Materialien wie Teflon eingesetzt werden, die einen besonders niedrigen Reibungskoeffizienten aufweisen.

Für ein einfaches Verfahren zur Verkeilung einer oben beschriebenen Vorrichtung wird der Deckkeil vorteilhafterweise in seine vorgesehene Endposition in die Ausnehmungen einer Nut fixiert und anschließend ein Treibkeil zunächst in die Ausnehmungen eingeschoben und anschließend eingetrieben. Dabei kann der Treibkeil von Hand bis zu einer gewissen Verfestigung an den Deckkeil heran geschoben werden, und die restliche benötigte axiale Verfestigungskraft mit einigen Hammerschlägen auf den Treibkeil durchgeführt werden.

Für eine Nachverkeilung bzw. Nachverspannung der Verkeilungsvorrichtung bei eingebautem Generatorrotor wird ein Treibkeil zweckmäßigerweise mit einer Stange, über einen an der Stange angeordneten Zapfen, der in die Bohrung des Treibkeils eingreift, eingetrieben. Dabei kann als Kraftüberträger vorzugsweise eine Aluminiumsstange mit einem Stahlzapfen eingesetzt werden. Die Stange wird dabei durch den Luftspalt zwischen Generatorständer und -rotor über das Langloch eines Deckkeils an eine Bohrung eines Treibkeils herangeführt, um dort in diese einzugreifen. Bei einer Nachverkeilung aller Wicklungsstabverkeilungen eines Generatorständers wird kreisförmig Treibkeil für Treibkeil nachgespannt. Nach Fertigstellung einer Keilrunde von der Blechpaketmitte nach außen wird die Stange dann eingekürzt und die nächste Keilrunde nachgespannt.

Die mit der Erfindung erzielten Vorteile bestehen insbesondere darin, dass durch die beschriebene Verkeilung von Wicklungsstäben in Nuten die Verkeilungszeit verkürzt werden kann. Weiterhin ist der für eine Verspannung einer Nutverkeilung erforderliche Kraftaufwand durch die beschriebene Ausgestaltung der Verkeilung deutlich geringer. Ein weiterer Vorteil ist, dass durch die Auslegung der Verkeilung für eine Nachverkeilung bei eingebautem Generatorrotor die Verfügbarkeit des Generators deutlich gesteigert werden kann, da sich die Länge von Wartungsarbeiten verringert. Die kurze Verkeilungszeit, die einfache Verkeilung mit geringem Kraftaufwand und die höhere Verfügbarkeit erhöhen insgesamt bei Neufertigung und Wartungen die Wirtschaftlichkeit elektrischer Generatoren.

Ein Ausführungsbeispiel der Erfindung wird anhand einer Zeichnung näher erläutert. Darin zeigen:
- FIG 1: im Querschnitt die Nut eines Blechpaketes eines Generatorständers,
- FIG 2: eine Verkeilung von Wicklungsstäben in einer Nut des Blechpaketes eines Generatorständers mit einem Deckkeil und einem Treibkeil,
- FIG 3: einen Deckkeil und
- FIG 4: einen Treibkeil.

Gleiche Teile sind in allen Figuren mit denselben Bezugszeichen versehen.

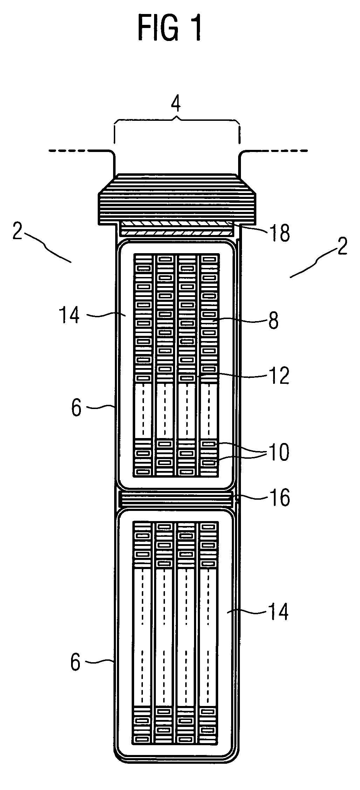

In FIG 1 ist im Querschnitt die Nut 4 eines Blechpaketes 2 eines Generatorständers dargestellt. In der Nut 4 sind zwei Wicklungsstäbe 6 positioniert. Diese beiden Wicklungsstäbe 6 sind untereinander gleich aufgebaut und bestehen aus versetzt angeordneten Massivleitern 8 und entsprechenden Hohlleiter 10 zur Kühlung der Wicklung. Die einzelnen Leiterebenen sind dabei durch eine Lagenisolation 12 voneinander getrennt und insgesamt von einer Isolierung 14 umschlossen. Zwischen den beiden Wicklungsstäben 6 ist eine Nutzwischenlage 16 vorgesehen, während die Nut 4 am oberen Ende durch eine Verkeilung abgeschlossen wird.

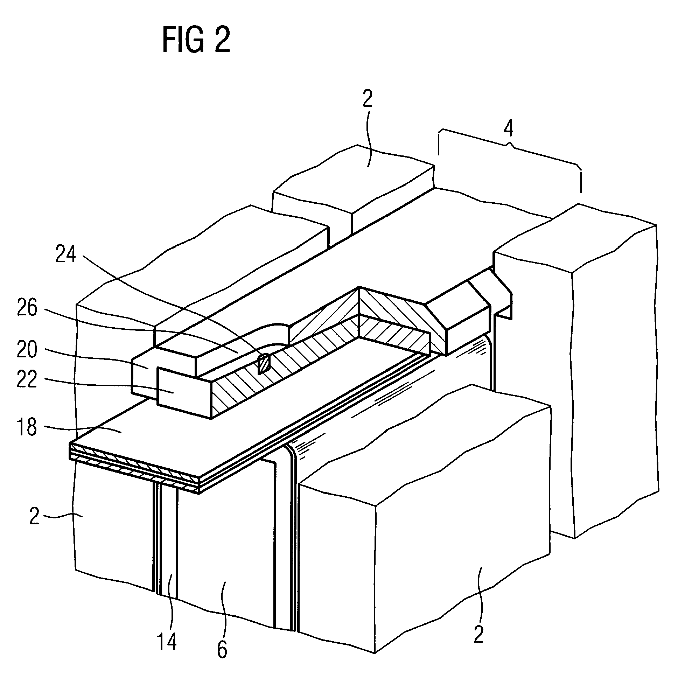

Die Verkeilung ist dabei so ausgeführt, dass sich die Wicklungsstäbe 6 möglichst einfach bei einer hohen Festigkeit in der Nut 4 fixieren lassen. In FIG 2 ist daher die Verkeilung der Wicklungsstäbe 6 in der Nut 4 näher dargestellt. Zur Verspannung der Wicklungsstäbe 6 in der Nut 4 ist oberhalb des oben liegenden Wicklungsstabes 6 eine Nutverschlussfeder 18 angeordnet, die als in Längsrichtung gewellte Blattfeder ausgeführt ist. Um diese Nutverschlussfeder 18 für eine hohe Festigkeit der Verkeilung entsprechend vorzuspannen, wird eine Kombination aus einem Deckkeil 20 und einem Treibkeil 22 verwendet, die in Ausnehmungen der Seitenwände der Nut 4 positioniert und verfestigt werden. Dabei wird zunächst der Deckkeil 20 in die Ausnehmungen der Nut 4 eingeschoben und anschließend der Treibkeil 22 zwischen Nutverschlussfeder 18 und Deckkeil 20 geschoben und anschließend eingetrieben. Dabei sind, wie aus FIG 2 hervorgeht, Deckkeil 20 und Treibkeil 22 mit ihren ansteigenden Keilflächen gegeneinander positioniert, so dass beim Eintreiben bzw. Verfestigen des Treibkeils 22 bereits eine geringe Verschiebung zu einer deutlichen Verbreiterung der Kombination aus Deckkeil 20 und Treibkeil 22 bezüglich der Nutausnehmungen der Nut 4 führt.

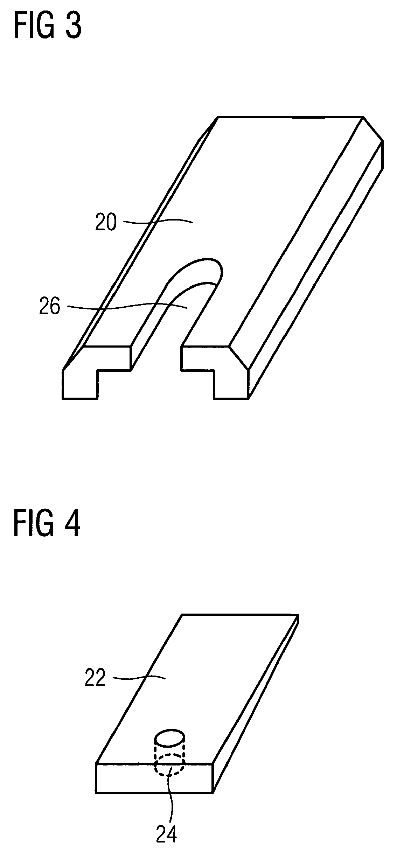

In FIG 3 ist der Deckkeil 20 und in FIG 4 der Treibkeil 22 näher dargestellt. Für eine geeignete Verkeilungsstabilität besteht der Deckkeil 20 aus Baumwollhartgewebe und der Treibkeil 22 aus Hartglasgewebe. Wie aus den Figuren 3 und 4 hervorgeht, ist der Deckkeil 20 und der Treibkeil 22 für eine Nachverkeilung bei eingebautem Generatorrotor ausgelegt. Dazu weist der Treibkeil 22 am äußeren Ende eine Bohrung 24 auf. In diese kann mit einem an einer Aluminiumstange befestigten Stahlzapfen eingegriffen werden und der Treibkeil 22 eingetrieben bzw. nachverfestigt werden. Die Aluminiumstange wird dazu durch den Luftspalt zwischen dem Blechpaket 2 des Ständers und dem Generatorrotor zur nachzuverkeilenden betreffenden Nut 4 geführt. Der Stahlzapfen wird dann durch das Langloch 26 des Deckkeils 20 in die Bohrung 24 des Treibkeils 22 geführt. Das Langloch 26 des Deckkeils 20 und die Bohrung 24 des Treibkeils weisen dazu den gleichen Durchmesser auf. Durch das Langloch 26 im Deckkeil 20 kann der eingreifende Stahlzapfen den Treibkeil 22 nachverfestigen, wobei der Deckkeil 20 an seiner Position fixiert bleibt und sich der Zapfen mit dem Treibkeil 22 im Langloch 26 verschieben kann.

Bei einer Nachverkeilung aller Wicklungsstabverkeilungen des Blechpaketes 2 des Generatorständers wird kreisförmig Treibkeil 22 für Treibkeil 22 nachgespannt. Nach Fertigstellung einer Keilrunde von der Mitte des Blechpaketes 2 nach außen, wird die Aluminiumstange dann eingekürzt und die nächste Keilrunde nachgespannt.

## Patentansprüche

1. Vorrichtung zum Fixieren von Wicklungsstäben (6) in Nuten (4) elektrischer Maschinen,
insbesondere zum Fixieren von Wicklungsstäben (6) in Nuten (4) eines Ständers eines elektrischen Generators, bei der eine Anzahl der Wicklungsstäbe (6) in einer Nut (4) eines Blechpaketes (2) mit einer Kombination aus einem in Ausnehmung der Nutseitenflächen verfestigten, die Nut (4) nach ihrer Außenseite hin abschließenden Deckkeil (20) und einem darunter liegenden Treibkeil (22) fixiert sind,
wobei der Deckkeil (20) und der Treibkeil (22) bezüglich ihrer in Längsrichtung zulaufenden Anzugsfläche umgekehrt gegeneinander ausgerichtet sind und mit ihren Anzugsflächen aneinander liegen.

2. Vorrichtung nach Anspruch 1,
deren Deckkeil (20) aus Baumwollhartgewebe und/oder deren Treibkeil (22) aus Hartglasgewebe besteht.

3. Vorrichtung nach Anspruch 1 oder 2,
deren Treibkeil (22) am äußeren Ende eine Bohrung (24) aufweist.

4. Vorrichtung nach Anspruch 3,
deren Deckkeil (20) im Bereich der Bohrung (24) eines darunter liegenden Treibkeils (22) ein Langloch (26) aufweist.

5. Vorrichtung nach Anspruch 4,
wobei die Bohrung (24) des Treibkeils (22) und das Langloch (26) des Deckkeils (20) den gleichen Durchmesser aufweisen.

6. Vorrichtung nach einem der Ansprüche 1 bis 5,
wobei eine oder beide aneinanderliegenden Anzugsflächen des Deckkeils (20) und Treibkeils (22) mit einer Beschichtung versehen sind, die einen erniedrigten Reibungskoeffizienten aufweist.

7. Verfahren zur Verkeilung einer Vorrichtung nach einem der Ansprüche 1 bis 6,
bei der ein Deckkeil (20) in seine vorgesehene Endposition in die Ausnehmung einer Nut (4) eingeschoben wird,
wobei anschließend ein Treibkeil (22) zunächst in die Ausnehmung eingeschoben und anschließend eingetrieben wird.

8. Verfahren zur Nachverkeilung einer Vorrichtung nach einem der Ansprüche 5 bis 7,
deren Treibkeil (22) mit einer Stange über einen an der Stange angeordneten Zapfen, der in die Bohrung (24) des Treibkeils (22) eingreift, eingetrieben wird.

9. Verfahren nach Anspruch 8,
bei der eine Aluminiumstange mit einem Stahlzapfen verwendet wird.
